# EUROPEAN PATENT SPECIFICATION

(11) **EP 1 641 008 B1**
(45) Date of publication and mention of the grant of the patent: **12.09.2007**
(21) Application number: 05020505.3
(22) Date of filing: 20.09.2005
(51) Int. Cl.: H01H 13/02

(54) **Lighted switch device**
Schalter mit beleuchtetem Knopf
Interrupteur avec bouton lumineux

(30) Priority: 27.09.2004 JP 2004280751
(43) Date of publication of application: 29.03.2006
(73) Proprietor: Citizen Electronics Co., Ltd., Fujiyoshida-shi, Yamanashi (JP); ALPHA CORPORATION, Yokohama-shi, Kanagawa (JP)
(72) Inventor: Toyama, Yasunori, Fujiyoshida-shi Yamanashi (JP)
(74) Representative: Dendorfer, Claus

(56) References cited:
- EP-A- 0 933 792
- EP-A- 1 389 788
- US-A1- 2004 008 505

## Description

### CROSS-REFERENCE TO THE RELATED APPLICATION

This application is based on and claims priority from Japanese Patent Application No. 2004-280751 filed on September 27, 2004.

### BACKGROUND OF THE INVENTION

### Field of the Invention

The present invention relates to a lighted switch device used in in-car instruments, electric home appliances, front doors or equipments and apparatus expected to be used in darkness.

### Description of Related Art

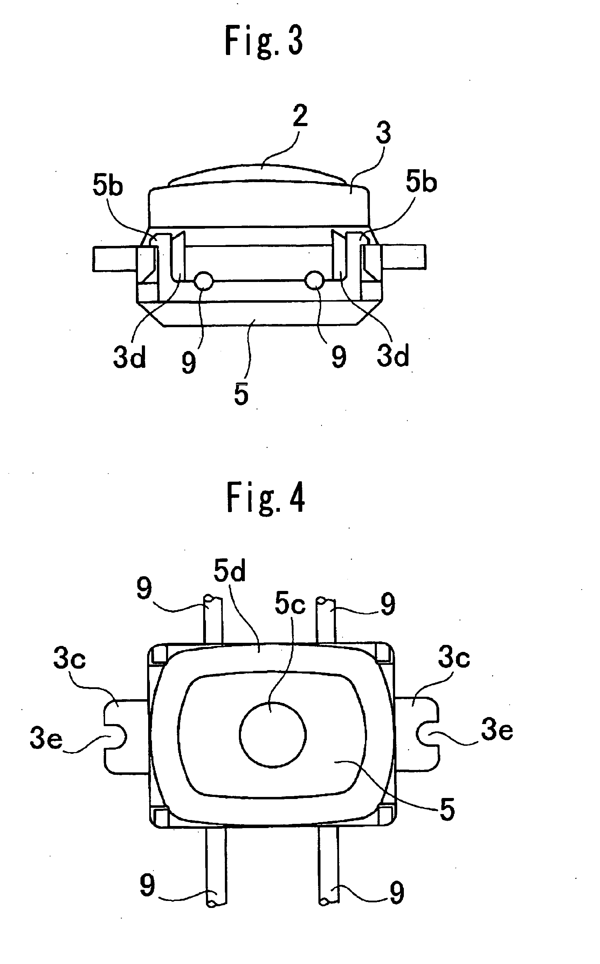

One known conventional lighted switch device used in meters of automobiles includes a press button, a lighting part provided on the press button, and a plurality of LEDs disposed on a wiring board, and the device is configured to guide light emitted from the LEDs through the lighting part to an emission surface provided on a top portion of the press button (for reference, see Japanese Patent Laid-Open No.2004-146260, FIG.3 and paragraphs 0016 to 0022).

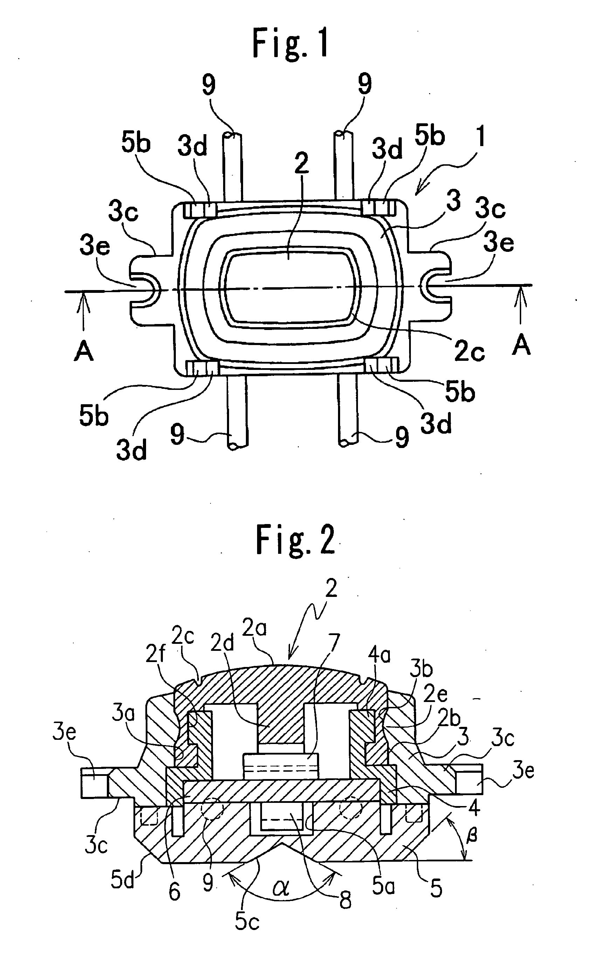

Also known is a keyhole illumination device including a light guide disposed at a periphery of a keyhole and a light source provided on a side surface or lower surface of the light guide and used in an ignition key of a vehicle; the device is configured to illuminate the periphery of the keyhole through the light guide by light emitted from the light source (for reference, see Japanese Utility Model Laid-Open No.S62-137972, FIG.1 and pagel).

However, in the lighted switch structure as described in Japanese Patent Laid-Open No.2004-146260, because the distance from the LEDs to the emission surface is relatively short, it is difficult to diffuse the light towards the emission surface, and hence the emission surface tends to be one spot illumination. Conversely, if a light diffusion material is introduced in the lighting part to achieve increased light diffusion efficiency, there is a problem that the amount of light emission is reduced.

Furthermore, in the keyhole illumination device as described in Japanese Utility Model Laid-Open No.S62-137972, the device is structured to indicate the position of the keyhole in darkness, however, there is a problem that the light becomes non-uniform in the light guide, because the light source is attached to a portion of the light guide. Therefore, in this device, the structure makes it difficult for light emitted from the light source to go round to the opposite side of the light source.

Document EP-A-0533792 discloses a lighted switch device according to the preamble of claim 1.

### SUMMARY OF THE INVENTION

An object of the present invention is to provide a lighted switch device capable of uniformly illuminating a key top or a periphery thereof so that the key top position can be recognized even in darkness.

To accomplish the above-mentioned object, a lighted switch device according to one embodiment of the present invention comprises a substrate, a switch provided on a first surface of the substrate, a light source provided on a second surface of the substrate, a key top to press the switch, and a light guide mechanism to guide light emitted from the light source to the key top or a periphery of the key top.

The light guide mechanism includes a first light guiding member to hold the key top in place and a second light guiding member disposed to cover the light source. The light emitted from the light source is guided through the second light guiding member to the first light guiding member disposed to surround the key top.

With this structure, the key top or the periphery thereof can be uniformly illuminated.

In one embodiment, the first and second light guiding members are made of transparent or translucent resin. In addition, at least one light diffusion material is contained in the first light guiding member or at least one light diffusion treatment such as undulations or the like is applied to a surface of the first light guiding member.

### BRIEF DESCRIPTION OF THE DRAWINGS

FIG.1 is a top plan view of a lighted switch device according to one embodiment of the present invention.
FIG.2 is a sectional view taken along line A-A in FIG.1.
FIG.3 is a front view of the lighted switch device shown in FIG.1.
FIG.4 is a bottom view of the lighted switch device shown in FIG.1.

### DETAILED DESCRIPTION OF THE PREFERRED EMBODIMENTS

Preferred embodiments of the present invention will be explained in detail with reference to the accompanying drawings below.

FIGs.1 to 4 illustrate one embodiment of a lighted switch device 1 according to the present invention. The lighted switch device 1 includes a substrate 6, as shown in FIG.2. A switch 7 is disposed on a first surface, for example, an upper surface, of the substrate 6 and a light source, for example, an LED 8 is disposed on a second surface, for example, a lower surface of the substrate 6 (see FIG.2). The switch 7 is attached to a central wiring pattern (not shown) provided on the upper surface of the substrate 6 and the LED 8 is attached to a central wiring pattern (not shown) provided on the lower surface of the substrate 6. The switch 7 and the LED 8 are disposed on a central axis of the lighted switch device 1

A key top 2 is disposed above the switch 7 to operate the switch 7. The key top 2 is made of a resilient material such as silicon, for example. The key top 2 is formed of a generally rectangular cylinder having a smoothly curved upper wall 2a and a side wall 2b extending from the upper wall 2a (see FIGs.1 and 2). The key top 2 also has a groove 2c provided along a peripheral edge of the upper surface or an outside surface of the upper wall 2a and a pillar part 2d provided on the central axis of the lighted switch device 1 to extend toward the switch 7 (see FIGs.1 and 2). As a result, light emitted from the LED 8 can illuminate around the key top 2 uniformly.

A first light guiding member 3 is provided to surround the key top 2. The first light guiding member 3 in the illustrated embodiment comprises a cylindrical light guiding frame made of transparent or translucent resin containing at least one light diffusion material. Also, at least one light diffusion treatment such as undulations or the like may be applied to a surface of the light guiding frame 3 instead of including the light diffusion material in the light guiding frame 3. The side wall 2b of the key top 2 is inserted in a central hole 3a provided in the light guiding frame 3. An outside surface of the side wall 2b of the key top 2 is provided with a concave portion 2e, and a convex portion 3b to engage with the concave portion 2e is provided in the central hole 3a of the light guiding frame 3. Thereby, the key top 2 is not easily disengaged from the light guiding frame 3.

The light guiding frame 3 also has a flange 3c, as shown in FIG.1. The flange 3c includes a plurality of cutouts 3d and at least two semi-circular mounting holes 3e for attaching the lighted switch device 1 to any chosen position.

A holding frame 4 is provided on an inner surface of the side wall 2b of the key top 2, as shown in FIG.2. The holding frame 4 acts to hold the key top 2 from inside, and the key top 2 is held between the holding frame 4 and the light guiding frame 3. The holding frame 4 has an upper part which is inserted in the side wall 2b of the key top 2 and a lower part which is mounted on the substrate 6. A concave portion 2f is provided in the inner surface of the side wall 2b of the key top 2 and a convex portion 4a fitting in the concave portion 2f is provided in the upper part of the holding frame 4. It is preferable that the convex portion 4a be provided at a position facing the convex portion 3b of the light guiding frame 3. In this way, the side wall 2b of the key top 2 is held by the convex portion 4a of the holding frame 4 and the convex portion 3b of the light guiding frame 3 facing the convex portion 4a.

A second light guiding member 5 is disposed on the lower surface of the substrate 6 to cover the LED 8 (see FIG.2). The second light guiding member 5 comprises a light guiding cap made of a transparent resin. The light guiding cap 5 has a concave portion 5a which is provided in a central portion of an upper surface of the light guiding cap 5. The LED 8 is disposed in the concave portion 5a.

The light guiding cap 5 also has hook portions 5b (see FIG.1) extending from four corners on the upper part and a light reflecting part. The light reflecting part includes a conical concave portion 5c formed on a central portion of a lower surface of the light guiding cap 5 to face the concave portion 5a, and an inclined surface 5d formed on an outer periphery of the light guiding cap 5 (see FIG.2). The light guiding cap 5 is securely connected to the light guiding frame 3 by snap-engaging or snap-fitting the hook portions 5b in the cutouts 3d of the light guiding frame 3. At this time, the key top 2 is securely held between the light guiding frame 3 and the holding frame 4, as described above, and the substrate 6 is also held between the light guiding cap 5 and the holding frame 4.

The light guiding frame 3 and the light guiding cap 5 are sealed at a jointed part thereof at a periphery of the substrate 6 by transparent or translucent resin (not shown) such as an epoxy type resin. Because the key top 2 and the light guiding frame 3 are in close contact as described above and the joint part of the light guiding frame 3 and the light guiding cap 5 is sealed by the transparent or translucent resin, the lighted switch device 1 has a waterproof structure.

In this embodiment, the LED 8 which is a single package comprising a blue LED element to emit white light is mounted on the central wiring pattern on the lower surface of the substrate 6.

Light emitted from the LED 8 is reflected on the conical concave portion 5c and the inclined surface 5d of the light guiding cap 5, as described hereinafter. As shown in FIG.2, by suitably selecting an apex angle α of the conical concave portion 5c and an oblique angle β of the inclined surface 5d, the light emitted from the LED 8 is now transmitted to the light guiding frame 3, preventing light emission from the light guiding cap 5. Further, it is found in one embodiment that the optimum value of α lies in the range of 90° to 150° and the optimum value of β lies in the range of 60° to 120°.

A plurality of lead wires 9 are connected to the wiring patterns which provide electrical contacts to the switch 7 and the LED 8 disposed on the substrate 6. It is desirable that the plurality of lead wires 9 are extended from the substrate 6 through a boundary surface of the light guiding frame 3 and the light guiding cap 5 to the outside of the lighted switch device. Preferably, the lead wires 9 are extended to the outside of the lighted switch device, disposed to have as much space as possible between each other. In one embodiment according to the present invention, respective two lead wires 9 are extended from both opposite surfaces of the lighted switch device 1 and the respective two lead wires 9 are disposed to have space between each other. The end of each of the lead wires 9 extended to the outside of the lighted switch device is connected to an external electric circuit (not shown).

Next, the condition of the lighted switch device in use is explained with relation to the embodiment described above.

The LED 8 is lighted by applying a current to the LED 8 through the lead wires 9. Light emitted from the LED 8 is dispersed in all directions by the conical concave portion 5c of the light guiding cap 5 and reflected on the inclined surface 5d, then directed to enter the upwardly disposed light guiding frame 3. The light which enters and passes through the light guiding frame 3 is dispersed in the light guiding frame 3 to uniformly illuminate the key top 2 and the illuminating light around the key top 2 appears to be in a generally ring-like state here. Accordingly, it is possible to operate the key by pressing the key top which is uniformly illuminated by the light, even in darkness. When the key top 2 is pressed to operate the key , the key top 2 is resiliently deformed in a downward direction and the pillar portion 2d presses the switch 7, thereby the switch 7 is turned on and the electric circuit which is connected to the switch 7 through the lead wires 9 is operated.

Furthermore, in the above-mentioned embodiment, the key top 2 is made of a resilient material and a groove 2c provided on the peripheral edge portion of the upper surface of the key top 2, so that these configurations make the upward and downward deformation of the key top easy. The light emitted from the LED can be dispersed in all directions by the conical concave portion 5c even though only a single package comprising a blue LED element to emit white light is used as the light source. Moreover, the light dispersed by the conical concave portion is reflected on the inclined surface 5d and then directed to enter the upwardly disposed light guiding frame 3. Light which enters the light guiding frame 3 is transmitted and dispersed efficiently, because at least one light diffusion material is contained in the transparent or translucent light guiding frame 3. As a result, light transmitted and dispersed through the light guiding frame 3 illuminates the area around the key top uniformly.

A blue LED element used here in a single package as the light source is generally expensive, however, in an embodiment according to the present invention, even a single package comprising a single LED element is sufficient to illuminate the key top, because light emitted from the LED element is used effectively. Consequently, the configurations according to the present invention enable provision of inexpensive lighted switch devices.

The lighted switch device 1 can be recognized even in darkness because of the uniformly illuminated key top or key position. Furthermore, it has a waterproof structure. Therefore, lighted switch devices according to the present invention can be applied to any apparatus and equipment provided outside, for example, any switches provided on a vehicle. Because the lead wires 9 are extended from the substrate 6, being disposed to extend laterally from the lighted switch device, the light transmission from the light source to the key top is not disturbed by the lead wires. In addition, the light transmission is not blocked because a transparent or translucent resin is used for the jointed surface of the light guiding frame 3 and the light guiding cap 5. Moreover, because the switch 7 and the LED 8 can be easily exchanged depending on conditions or requirements, it is possible to respond quickly to the user's demands. Furthermore, because the main parts of the lighted switch devices according to the present invention can be produced inexpensively by a resinous forming technology, cost reduction can be achieved.

According to the present invention, the key top and the area around it are uniformly illuminated and the key position can be recognized even in darkness, as mentioned above. Moreover, it is possible to provide a lighted switch device having good functionality and design properties by selecting a suitable light source without cost increase.

In addition, the present invention is not necessarily limited to the above-mentioned embodiment. For example, cutouts may be provided on the light guiding cap 5 and hook portions may be provided on the light guiding frame 3 to allow snap-fitting engagement between the light guiding frame 3 and the light guiding cap 5.

Moreover, the first and second light guiding members may be welded or formed integrally. In this case, an easily assembled lighted switch device may be provided merely by making slight changes to the shape of portions of the parts. The light source is not limited to an LED package comprising a blue LED element; other LED packages, for example, unicolor LED packages, or multicolor LED packages comprising at least one LED element, fluorescent materials and/or dye stuff, may be used as the light source. Moreover, a plurality of LED elements having different colors, for example, Red (R), Green (G) and Blue (B) may be packaged in one. In these cases, the emission color can be changed to suit the purpose. Furthermore, the brightness of the light source can be intensified by using an increased number of LED elements. In the above embodiment, a lamp instead of an LED package or element may be used as the light source.

In addition, the light emitted from the LED as a light source and transmitted through the light guiding cap 5 to the key top 2 can be efficiently prevented from being emitted from the light guiding cap 5 by providing a reflecting layer on an outside surface of the light guiding cap 5 excluding the upper surfaces comprising the upper surface which faces the light source and the upper surface which is joined to the light guiding frame 3. The reflecting layer can be formed by, for example, plating, spattering, deposition, or painting. For a good design a plated plastic plate may be attached to the upper surface of the key top to achieve a glossy metallic appearance. Also, the light source may be provided on the substrate's upper surface which is the same side on which the switch to illuminate the key top is located. In this case, the key top is made of transparent or translucent material.

The lighted switch devices according to the present invention can be applied to automobiles, in-car instruments, electric home appliances, front doors or equipments and apparatus expected to be used in darkness.

## Claims

1. A lighted switch device, comprising:
a substrate (6);
a switch (7) provided on a first surface of the substrate;
a light source (8) provided on a second surface of the substrate;
a key top (2) provided above the switch; and
a light guide mechanism (3,5) provided adjacent to the key top,
wherein the light guide mechanism comprises a first light guiding member (3) to hold the key top in place and a second light guiding member (15) disposed to cover the light source, and
wherein the light emitted from the light source is guided through the second light guiding member to the first light guiding member **characterised in that** said first light guiding member is disposed to surround the key top.

2. The lighted switch device according to claim 1,
wherein each of the first and second guiding members is made of transparent resin.

3. The lighted switch device according to claim 2,
wherein at least one light diffusion material is contained in the first light guiding member.

4. The lighted switch device according to claim 2,
wherein at least one light diffusion treatment is applied to a surface of the first light guiding member.

5. The lighted switch device according to claim 1,
wherein the second light guiding member (5) has at least one light reflecting part (5c, 5d) to reflect light emitted from the light source.

6. The lighted switch device according to claim 5,
wherein the light reflecting part includes a conical concave portion (5c) provided on a central portion of a lower surface of the second light guiding member and an inclined surface (5d) provided on an outer periphery of the lower surface of the second light guiding member.

7. The lighted switch device according to claim 2,
wherein the first and second light guiding members are jointed to each other.

8. The lighted switch device according to claim 1,
wherein one of the first and second light guiding members includes a plurality of hook portions (5b) and the other includes a plurality of cutouts (3d), and
wherein the first and second light guiding members are jointed by engaging the hook portions and the cutouts.

9. The lighted switch device according to claim 1,
wherein the switch (7) and the light source (8) are mounted on wiring patterns disposed on the first and second surfaces of the substrate,
wherein lead wires (9) are extended from the wiring patterns to outside of the lighted switch device, and
wherein the lead wires extended to outside of the lighted switch device are disposed to have space between each other.

10. The lighted switch device according to claim 1,
wherein a reflecting layer is provided on an outside surface of the second light guiding member excluding upper surfaces.

11. The lighted switch device according to claim 10,
wherein the reflecting layer is formed by a way selected from plating, deposition, spattering, and painting.

12. The lighted switch device according to claim 1,
further comprising a holding frame (4) disposed in the key top,
wherein the key top is held by the holding frame and the first light guiding member.

13. The lighted switch device according to claim 1,
wherein the first and second light guiding members are integrally formed.

14. The lighted switch device according to claim 1,
wherein the key top is made of a resilient resin, and
wherein a groove is provided on an outside surface of the key top.

## Patentansprüche

1. Beleuchtete Schaltvorrichtung, aufweisend:
ein Substrat (6);
einen Schalter (7), der auf einer ersten Fläche des Substrates vorgesehen ist;
eine Lichtquelle (8), die auf einer zweiten Fläche des Substrates vorgesehen ist;
ein Tastenoberteil (2), das oberhalb des Schalters vorgesehen ist; und
einen Lichtleitmechanismus (3, 5), der benachbart zum Tastenoberteil vorgesehen ist,
wobei der Lichtleitmechanismus ein erstes Lichtleitelement (3), um das Tastenoberteil an seinem Ort zu halten, und ein zweites Lichtleitelement (5) aufweist, das so angeordnet ist, dass es die Lichtquelle abdeckt, und
wobei das von der Lichtquelle ausgesendete Licht durch das zweite Lichtleitelement zum ersten Lichtleitelement geleitet wird, **dadurch gekennzeichnet, dass** das erste Lichtleitelement so angeordnet ist, dass es das Tastenoberteil umgibt.

2. Beleuchtete Schaltvorrichtung nach Anspruch 1,
bei der das erste und das zweite Leitelement aus transparentem Kunstharz bestehen.

3. Beleuchtete Schaltvorrichtung nach Anspruch 2,
bei der mindestens ein Lichtstreuungsmaterial im ersten Lichtleitelement enthalten ist.

4. Beleuchtete Schaltvorrichtung nach Anspruch 2,
bei der mindestens eine Lichtstreuungsbehandlung auf eine Fläche des ersten Lichtleitelementes angewendet wird.

5. Beleuchtete Schaltvorrichtung nach Anspruch 1,
bei der das zweite Lichtleitelement (5) mindestens einen Lichtreflexionsteil (5c, 5d) aufweist, um von der Lichtquelle ausgesendetes Licht zu reflektieren.

6. Beleuchtete Schaltvorrichtung nach Anspruch 5,
bei der der Lichtreflexionsteil einen konischen konkaven Abschnitt (5c), der an einem zentralen Abschnitt einer Unterseite des zweiten Lichtleitelementes vorgesehen ist, und eine geneigte Fläche (5d) aufweist, die an einem Außenumfang der Unterseite des zweiten Lichtleitelementes vorgesehen ist.

7. Beleuchtete Schaltvorrichtung nach Anspruch 2,
bei der das erste und das zweite Lichtleitelement miteinander verbunden sind.

8. Beleuchtete Schaltvorrichtung nach Anspruch 1,
bei der ein Lichtleitelement, nämlich das erste oder das zweite Lichtleitelement, eine Mehrzahl von Hakenabschnitten (15b) beinhaltet und das andere Lichtleitelement eine Mehrzahl von Aussparungen (3d) beinhaltet, und
bei der das erste und das zweite Lichtleitelement **dadurch** verbunden sind, dass die Hakenabschnitte und die Aussparungen miteinander in Eingriff gebracht sind.

9. Beleuchtete Schaltvorrichtung nach Anspruch 1,
bei der der Schalter (7) und die Lichtquelle (8) an Verdrahtungsmustern angebracht sind, die auf der ersten und der zweiten Fläche des Substrates angeordnet sind,
bei der sich Anschlussdrähte (9) von den Verdrahtungsmustern zum Äußeren der beleuchteten Schaltvorrichtung hin erstrecken, und
bei der die Anschlussdrähte, die sich zum Äußeren der beleuchteten Schaltvorrichtung hin erstrecken, so angeordnet sind, dass sie zwischen sich einen Zwischenraum aufweisen.

10. Beleuchtete Schaltvorrichtung nach Anspruch 1,
bei der eine Reflexionsschicht auf einer Außenfläche, nicht jedoch einer Oberseite, des zweiten Lichtleitelementes vorgesehen ist.

11. Beleuchtete Schaltvorrichtung nach Anspruch 10,
bei der die Reflexionsschicht durch Plattieren, Abscheiden, Besprühen oder Bestreichen ausgebildet ist.

12. Beleuchtete Schaltvorrichtung nach Anspruch 1,
die weiter einen Halterahmen (4) aufweist, der im Tastenoberteil angeordnet ist,
wobei das Tastenoberteil durch den Halterahmen und das erste Lichtleitelement gehalten wird.

13. Beleuchtete Schaltvorrichtung nach Anspruch 1,
bei der das erste und das zweite Lichtleitelement integral ausgebildet sind.

14. Beleuchtete Schaltvorrichtung nach Anspruch 1,
bei der das Tastenoberteil aus einem elastischen Kunstharz besteht, und
bei der eine Nut auf einer Außenfläche des Tastenoberteils vorgesehen ist.

## Revendications

1. Interrupteur avec bouton lumineux, comprenant :
un substrat (6) ;
un bouton (7) prévu sur une première surface du substrat ;
une source de lumière (8) prévue sur une seconde surface du substrat ;
un dessus de clé (2) prévu au-dessus du bouton ; et
un mécanisme de guidage de la lumière (3, 5) prévu de manière adjacente au dessus de clé,
dans lequel le mécanisme de guidage de la lumière comprend un premier élément de guidage de la lumière (3) destiné à maintenir le dessus de clé en place et un second élément de guidage de la lumière (5) disposé afin de recouvrir la source de lumière, et
dans lequel la lumière émise par la source de lumière est guidée par le second élément de guidage de la lumière vers le premier élément de guidage de la lumière, **caractérisé en ce que** ledit premier élément de guidage de la lumière est disposé afin d'entourer le dessus de clé.

2. Interrupteur avec bouton lumineux selon la revendication 1,
dans lequel chacun du premier et du second éléments de guidage de la lumière est constitué d'une résine transparente.

3. Interrupteur avec bouton lumineux selon la revendication 2,
dans lequel au moins un matériau de diffusion de la lumière est contenu dans le premier élément de guidage de la lumière.

4. Interrupteur avec bouton lumineux selon la revendication 2,
dans lequel au moins un traitement de diffusion de la lumière est appliqué sur une surface du premier élément de guidage de la lumière.

5. Interrupteur avec bouton lumineux selon la revendication 1,
dans lequel le second élément de guidage de la lumière (5) possède au moins une partie réfléchissant la lumière (5c, 5d) destinée à réfléchir la lumière émise par la source de lumière.

6. Interrupteur avec bouton lumineux selon la revendication 5,
dans lequel la partie réfléchissant la lumière comprend une partie concave conique (5c) prévue sur une partie centrale d'une surface inférieure du second élément de guidage de la lumière et une surface inclinée (5d) prévue sur une périphérie externe de la surface inférieure du second élément de guidage de la lumière.

7. Interrupteur avec bouton lumineux selon la revendication 2,
dans lequel le premier et le second éléments de guidage de la lumière sont joints l'un à l'autre.

8. Interrupteur avec bouton lumineux selon la revendication 1,
dans lequel l'un du premier et du second éléments de guidage de la lumière comprend une pluralité de parties de crochets (5b) et l'autre comprend une pluralité de découpes (3d), et
dans lequel le premier et le second éléments de guidage de la lumière sont joints en engageant les parties de crochets et les découpes.

9. Interrupteur avec bouton lumineux selon la revendication 1,
dans lequel le bouton (7) et la source de lumière (8) sont montés sur des schémas de câblage disposés sur la première et la seconde surfaces du substrat,
dans lequel des fils (9) s'étendent des schémas de câblage vers l'extérieur de l'interrupteur avec bouton lumineux, et
dans lequel les fils s'étendant vers l'extérieur de l'interrupteur avec bouton lumineux sont disposés afin d'avoir un espace entre eux.

10. Interrupteur avec bouton lumineux selon la revendication 1,
dans lequel une couche réfléchissante est prévue sur une surface extérieure du second élément de guidage de la lumière, à l'exclusion des surfaces supérieures.

11. Interrupteur avec bouton lumineux selon la revendication 10,
dans lequel la couche réfléchissante est formée d'une manière choisie parmi un placage, un dépôt, un mouchetage et une peinture.

12. Interrupteur avec bouton lumineux selon la revendication 1,
comprenant en outre un cadre de maintien (4) disposé dans le dessus de clé,
dans lequel le dessus de clé est maintenu parle cadre de maintien et le premier élément de guidage de la lumière.

13. Interrupteur avec bouton lumineux selon la revendication 1,
dans lequel le premier et le second éléments de guidage de la lumière sont formés intégralement.

14. Interrupteur avec bouton lumineux selon la revendication 1,
dans lequel le dessus de clé est constitué d'une résine élastique, et
dans lequel une rainure est prévue sur une surface extérieure du dessus de clé.
